# EUROPEAN PATENT SPECIFICATION

(11) **EP 3 581 429 B1**
(45) Date of publication and mention of the grant of the patent: **10.08.2022**
(21) Application number: 18177842.4
(22) Date of filing: 14.06.2018
(51) Int. Cl.: B60L 9/30

(54) **TRACTION CONVERTER WITH AC AND DC OPERATION MODES**
TRAKTIONSWANDLER MIT WECHSELSTROM- UND GLEICHSTROMBETRIEBSMODI
CONVERTISSEUR DE TRACTION À MODES DE FONCTIONNEMENT CA ET CC

(43) Date of publication of application: 18.12.2019
(73) Proprietor: ABB Schweiz AG, 5400 Baden (CH)
(72) Inventor: MATTSSON, Valtteri, 5412 Gebenstorf (CH); HUGGENBERGER, Thomas, 5417 Untersiggenthal (CH); GRIFFIN, Denise, 5430 Wettingen (CH); DE-VANNA, Elisabetta, 8956 Killwangen (CH)
(74) Representative: Qip Patentanwälte Dr. Kuehn & Partner mbB

(56) References cited:
- EP-A1- 1 052 136
- EP-A2- 1 520 746
- WO-A1-97/47492
- WO-A1-03/018346
- PROVOST A: "DREISYSTEMLOKOMOTIVE BAUREIHE 36000 ASTRIDE DER SOCIETE NATIONALE DES CHEMINS DE FER FRANCAIS", EB- ELEKTRISCHE BAHNEN, DIV-DEUTSCHER INDUSTRIEVERLAG, vol. 95, no. 8, 1 August 1997 (1997-08-01) , pages 214-221, XP000697924, ISSN: 0013-5437

## Description

### FIELD OF THE INVENTION

The invention relates to the field of supplying a traction vehicle with electric power. In particular, the invention relates to a traction converter and a method for operating the traction converter.

### BACKGROUND OF THE INVENTION

Traction vehicles may be supplied via a catenary line with electric power. For converting this electric power into a form, which is supplied to motors and auxiliary loads of the traction vehicle, the traction vehicles comprise one or more traction converters, which also may comprise one or more transformers.

Specific traction vehicles are adapted to be supplied with one or more AC voltages and one or more DC voltages. In this case, the traction vehicle may have several converters for generating the voltage to be supplied to the motors and/or auxiliary loads.

For example, such a traction vehicle may comprise a separate AC frontend four quadrant converter and an AC transformer for one or more AC operation modes. For DC operation modes, the traction vehicle may comprise a separate DC line inductor, a DC front-end converter, which may feed the AC transformer. The AC transformer then may have to be adapted for handling a square wave from the DC frontend converter.

EP 2 695 763 A2 shows a traction power converter, which is adapted to switch between two AC and two DC operation modes.

WO03/018 346 A1 shows a multiple voltage power supply for a railway vehicle, which comprises a transformer, a four quadrant converter, a choke arrangement and switches for interconnecting these components in different ways. Several AC and DC operation modes are described.

Provost A: "Dreisystemlokomotive Baureihe 3600 ASTRIDE der Societe Nationale des Chemins de Fer Francais", EB-Elektrische Bahnen, DIV-Deutscher Industrieverlag, vol. 95, no. 8, 1 August 1997, illustrates a converter system for a train with one AC and two DC operation modes. It is mentioned that in the DC operation modes, converters of the converter system may be used as buck or boost converters.

EP 1 520 746 A2 shows a converter system for a train with a transformer, a choke and a converter. The choke, which is connectable to a DC input of the train may be connected in different operation modes either to an input side of the converter or a DC link at the output side of the converter.

EP 1 052 136 A1 also shows a converter system for a train with a transformer, a choke and a converter. There are several switches, which make it possible to connect the choke between inputs or outputs of the converter.

### DESCRIPTION OF THE INVENTION

It is an objective of the invention to provide a small and economic traction converter for a traction vehicle supplyable with different supply voltages. It is a further objective of the invention to reduce the number of parts of such a traction converter.

These objectives are achieved by the subject-matter of the independent claims 1 and 14, which define the invention. Further exemplary embodiments are evident from the dependent claims and the following description.

A first aspect of the invention relates to a traction converter. A traction converter may be an electrical power converter installed in a traction vehicle, such as a train or tram. The traction converter may be adapted for processing currents of more than 100 A and/or more than 1 kV.

According to an embodiment of the invention, the traction converter comprises a transformer, a four quadrant converter, a choke arrangement and a switch arrangement. It may be seen as a gist of the invention that the switch arrangement may be adapted for interconnecting the transformer, the four quadrant converter and/or the choke arrangement in different operation modes in such a way that these components are redundantly used in these operation modes.

The transformer is adapted for transforming an AC voltage at a primary side from an AC input into a different AC voltage at a secondary side. The AC input may be connected to a catenary line providing the input AC voltage. The input AC voltage may be 15 kV or 25 kV AC. These two AC voltages may be processed in a first and a second AC operation mode.

The four quadrant converter is adapted for converting an AC voltage at an input side into a DC voltage at an output side connected to a DC link. The AC voltage may be provided by the transformer and/or may be generated by the four quadrant converter itself during a DC operation mode, in which the chopper choke is used as energy storage. The four quadrant converter may act either as line converter in an AC operation mode or a as a chopper (i.e. step-up) converter. For example, in a DC operation mode, the four quadrant converter may convert 1.5 kV DC to 3 kV DC in a 1.5 kV DC operation mode.

A four quadrant converter may be a converter, which is adapted for power transfer in both directions, i.e. from the input side to the output side and vice versa. The four quadrant converter may be adapted for converting a DC voltage at the output side into an AC current at the input side.

The four quadrant converter may be seen as a frontend converter, which, via the DC link supplies one or more secondary side converters, which are used for supplying loads of the traction vehicle.

It may be that the four quadrant converter has two, three or more inputs and/or input phases at the input side. For example, the four quadrant converter may be a two-phase or a three-phase converter at the input side.

The four quadrant converter may comprise an active semiconductor bridge for each input phase. However, also other topologies are possible. In general, the four quadrant converter may be a 2-level or 3-level converter and/or may comprise 2-level or 3-level semiconductor bridges.

It may be that there are two or more four quadrant converters, which may be designed and/or interconnected with the other components of the traction converter as the four quadrant converter described above and below. It may be that the transformer has a secondary winding for every four quadrant converter.

The choke arrangement comprises two chopper chokes. A chopper choke as well as each of the line chokes mentioned below may be an inductor, such as a winding possibly on a core. It may be that there is a chopper choke for each input and/or input phase of the four quadrant converter. These two or more chopper chokes may be star-connected at a star-point.

The traction converter furthermore comprises a switch arrangement, which may comprise several switches for interconnecting the components of the traction converter in different operation modes. Each switch of the switch arrangement may be or may comprise an electromechanical switch and/or a semiconductor switch.

The traction converter may be seen as one integrated converter for all operation modes. With the traction converter, volume may be saved and the electrical installation in the traction vehicle may be built more compact. Additionally, fewer components may have to be serviced. Furthermore, only spare parts of one voltage level may be provided. Since the same components may be used in different operation modes, the dimensioning of the components may take into account all limitations from the different operation modes.

The switch arrangement may switch the traction converter into one or more AC operation modes and one or more DC operation modes.

In an AC operation mode of the traction converter, such as a 15 kV operation mode or a 25 kV operation mode, the switch arrangement is adapted for connecting the primary side of the transformer to an electric input of the traction converter and for connecting the secondary side of the transformer to the input side of the four quadrant converter. The transformer may then transform the input AC voltage into a lower AC voltage, which is converted by the four quadrant converter into a DC voltage, such as 3 kV DC, which is supplied to the DC link.

In a DC operation mode of the traction converter, such as a 1.5 kV DC operation mode, the switch arrangement is adapted for connecting the electric input of the traction converter to a positive DC input of the traction converter, for connecting the two chopper chokes to an input of the input side of the four quadrant converter and for connecting a positive DC input of the traction converter to the two chopper chokes. For example, the chopper chokes may be connected between two inputs of the input side of the four quadrant converter. The DC voltage from the DC input may be injected into the two chopper chokes, which are put into resonance by the four quadrant converter while the current of the choke may be actively controlled. The four quadrant converter may be operated as DC-to-DC step up converter. Also, in this operation mode, a 3 kV DC voltage may be supplied to the DC link.

According to an embodiment of the invention, the switch arrangement comprises a mode switch for either connecting a first input of the input side of the four quadrant converter with a first output of the secondary side of the transformer or with the two chopper chokes. Each input of the four quadrant converter may be connected with one chopper choke, which all may be connected in a star-point.

The choke arrangement comprises two chopper chokes. The two chopper chokes may be series connected between two inputs of the input side of the four quadrant converter. The DC input of the traction converter may be connected to a midpoint or star-point between the two chopper chokes. When the four quadrant converter has three phases, three chopper chokes may be star-connected between the three inputs of the input side of the four quadrant converter. The star-point may be connected to the DC input of the traction converter. It may be that the star-point is connected via one or more line chokes with the DC input.

In a DC operation mode, such as the 1.5 kV DC operation mode, of the traction converter, the switch arrangement is adapted for connecting ends of the two chopper chokes to the inputs of the input side of the four quadrant converter and for connecting the positive DC input of the traction converter to the other ends of the two chopper chokes, i.e. to the midpoint and/or star-point.

According to an embodiment of the invention, a mode switch is additionally adapted for either connecting a second input of the input side of the four quadrant converter with a second output of the secondary side of the transformer or with the two chopper chokes. In other words, the mode switch may either interconnect at least two outputs of the transformer with at least two inputs of the input side of the four quadrant converter or may interconnect the at least two inputs with the at least two chopper chokes. The mode switch may be designed that all these components are connected and/or disconnected simultaneously, for example, since the switch components are mechanically interconnected. The mode switch may be a tap changer.

With the mode switch, the four quadrant converter may be connected to the transformer for converting and AC voltage from the transformer into a DC voltage for the DC link. Alternatively, with the mode switch, the four quadrant converter may be connected to the at least one chopper choke for converting a DC input voltage for the traction converter into another DC voltage for the DC link.

According to an embodiment of the invention, the DC operation mode is a first DC operation mode, such as a 1.5 kV DC operation mode, and the traction converter has a second DC operation mode, such as a 3 kV DC operation mode. In the second DC operation mode, the DC input voltage may be higher as in the first DC operation mode.

According to an embodiment of the invention, in the second DC operation mode, the switch arrangement is adapted for connecting one of the at least two chopper chokes between the DC input of the traction converter and the DC link. In this operation mode, one or more chopper chokes may be used for line inductance and/or as filter inductor.

According to an embodiment of the invention, the switch arrangement comprises a DC link switch for disconnecting the two chopper chokes from the DC link. For example, the two or more chopper chokes, which may be used as filter inductors, may be connected via the DC link switch to a positive input of the DC link.

According to an embodiment of the invention, in the second DC operation mode, the four quadrant converter is bypassed. This may be achieved by connecting the four quadrant converter with the mode switch to the transformer, which is disconnected from a voltage supply during DC operation. With the mode switch, the four quadrant converter may be disconnected from choke arrangement.

Furthermore, in the second DC operation mode, at least one chopper choke may be connected to the DC link. This may be achieved by closing the Dc link switch.

The traction converter comprises a filter capacitor. In a DC operation mode, the filter capacitor may be connected to a negative input of the traction converter. In an AC operation mode, the filter capacitor may be used in a second harmonic filter. On the other side, the filter capacitor may be connected via a filter switch to the chopper arrangement.

According to an embodiment of the invention, the switch arrangement comprises a filter switch for disconnecting the filter capacitor from at least one chopper choke and/or the choke arrangement.

In the DC operation mode, such as the 1.5 kV DC operation mode, the switch arrangement is adapted for connecting the filter capacitor between one of the two chopper chokes and a negative DC input of the traction converter. For example, the filter capacitor may be connected to a midpoint and/or star-point of the two chopper chokes.

In the AC operation mode, such as the 15 kV AC operation mode, the switch arrangement is adapted for connecting the filter capacitor and one of the two chopper chokes in series and for connecting the filter capacitor and the one of the two chopper choke in parallel with the DC link. In this operation mode, the filter switch and the DC link switch may be closed.

According to an embodiment of the invention, the AC operation mode is a first AC operation mode and the traction converter has a second AC operation mode. In the second AC operation mode, the AC input voltage may be higher as in the first AC operation mode.

According to an embodiment of the invention, in the second AC operation mode, the filter capacitor and the two chopper chokes are disconnected from the DC link. In this operation mode, the DC link switch may be opened.

In summary, in the first AC operation mode, such as a 15 kV AC operation mode, two or more of the chopper chokes may be used as 2nd harmonic filter choke. In this operation mode, the filter capacitor may be used as 2nd harmonic filter capacitor.

In the first DC operation mode, such as the 1.5 kV operation mode, the filter capacitor may be an LCL filter capacitor in combination with the two chopper chokes and/or with the choke arrangement.

According to an embodiment of the invention, the secondary side of the transformer comprises a secondary winding with three outputs. When there are more than one AC operation mode, two of these outputs may be used for generating a similar and/or same output voltage from different AC input voltages.

According to an embodiment of the invention, in the first operation mode, such as a 15 kV AC operation mode, the switch arrangement is adapted for connecting the input side of the four quadrant converter with a longer part of the secondary winding and, in a second AC operation mode, such as a 25 kV AC operation mode, the switch arrangement is adapted for connecting the input side of the four quadrant converter with a shorter part of the secondary winding.

It has to be noted that the shorter part of the secondary winding may be a part of the longer part of the secondary winding, which longer part may be the complete secondary winding.

According to an embodiment of the invention, the switch arrangement comprises a transformer switch for either connecting an input of the input side of the four quadrant converter to a first output of the secondary winding or to a second output of the secondary winding. With the transformer switch, the shorter part or the longer part of the transformer may be selected.

According to an embodiment of the invention, the choke arrangement comprises two line chokes. The line chokes only may be used in a DC operation mode, for example for filtering a DC input voltage of the traction converter.

It may be that the transformer and the choke arrangement, i.e. the two chopper chokes and optionally the line chokes, are integrated into one component. No separate DC-line choke may be required. This may result in a more compact traction converter.

According to an embodiment of the invention, the switch arrangement is adapted for connecting the two line chokes in parallel or in series between the DC input of the traction converter and the at least one chopper choke. For example, the line chokes may be connected to a midpoint or star-point of the chopper chokes.

According to an embodiment of the invention, in the first DC operation mode, such as a 3 kV DC operation mode, the two line chokes are connected in series and in the second DC operation mode, such as a 1.5 kV DC operation mode, the two line chokes are connected in parallel.

According to an embodiment of the invention, the switch arrangement may comprise line choke switches, which are used for connecting and/or disconnecting the line chokes to the other components of the traction converter, either in parallel or in series. The line chokes may be directly connected with their first ends and/or may be connected via a first line choke switch via their second ends. The first ends may be connected via a second line choke switch with the DC input. One of the second ends may be connected via a third line choke switch to the DC input and the other second end may be connected to the at least one chopper choke. In the case of more than one chopper choke, the other first end may be connected to the midpoint and/or a star-point of the chopper chokes.

According to an embodiment of the invention, a filter switch for connecting a filter capacitor is connected to a connection between the two chopper chokes and the line chokes. The filter switch may connect the filter capacitor to a first end of a line choke.

According to an embodiment of the invention, the DC link comprises at least one DC link capacitor.

According to an embodiment of the invention, the traction converter further comprises at least one secondary side converter connected to the DC link. The at least one secondary side converter may be adapted for suppling at least one of a motor of a traction vehicle, a braking resistor and/or an auxiliary load.

The number of loads connected to the DC link is not limited. There may be one or more motor converters, one or more auxiliary converters, one or more fixed frequency outputs, one or more variable frequency outputs, one or more battery charger outputs and/or one or more voltage limiting units.

A further aspect of the invention relates to a method for operating a traction converter, for example as described in the above and in the below. The traction converter may comprise a controller, which performs the method as described below. The controller may be adapted for switching the switches as described in the above and in the below and/or for controlling the four quadrant converter. The method may be performed automatically and/or may be implemented as a computer program in the controller.

It has to be understood that features of the method as described in the above and in the following may be features of the traction converter as described in the above and in the following, and vice versa.

According to an embodiment of the invention, the method comprises: in an AC operation mode of the traction converter: connecting the primary side of the transformer to an electric input of the traction converter; connecting the secondary side of the transformer to the input side of the four quadrant converter; and operating the four quadrant converter as AC-to-DC rectifier.

According to an embodiment of the invention, the method comprises: in a DC operation mode of the traction converter: connecting the electric input of the traction converter to a positive DC input of the traction converter; connecting the two chopper chokes to an input of the input side of the four quadrant converter; connecting a positive DC input of the traction to the two chopper chokes; and operating the four quadrant converter as step-up converter in the DC operation mode using the two chopper chokes as energy storage.

In a first DC operation mode, a 1.5 kV DC input voltage may be boosted by the four quadrant converter to a DC voltage in the DC link, which may be similar to a DC voltage in a 3 kV DC operation mode. In this operation mode, the two chopper chokes may be used as inductive energy storage.

In a second DC operation mode, 3 kV DC is supplied via a line inductor directly to the main DC link. In this operation mode, one or more of the chopper chokes may be used as filter choke. This may generate lower losses and/or the line chokes may provide input filtering.

In a first AC operation mode, a 15 kV AC input voltage may be rectified by the transformer and the four quadrant converter to a DC voltage in the DC link, which may be similar to a DC voltage in a 3 kV DC operation mode. In this operation mode, one or more of the chopper chokes may be used as filter inductor for a 2nd harmonic filter.

In a second AC operation mode, a 25 kV AC input voltage may be rectified by the transformer and the four quadrant converter to a DC voltage in the DC link, which may be similar to a DC voltage in a 3 kV DC operation mode. In this operation mode, no second harmonic filter may have to be present.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a circuit diagram of a traction converter according to an embodiment of the invention.
Fig. 2 schematically shows a circuit diagram of a part of a traction converter according to an embodiment of the invention.
Fig. 3A shows a diagram illustrating the traction converter of Fig. 1 in a first DC operation mode according to an embodiment of the invention.
Fig. 3B shows a diagram illustrating the traction converter of Fig. 1 in a second DC operation mode according to an embodiment of the invention.
Fig. 3C shows a diagram illustrating the traction converter of Fig. 1 in a first AC operation mode according to an embodiment of the invention.
Fig. 3D shows a diagram illustrating the traction converter of Fig. 1 in a second AC operation mode according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

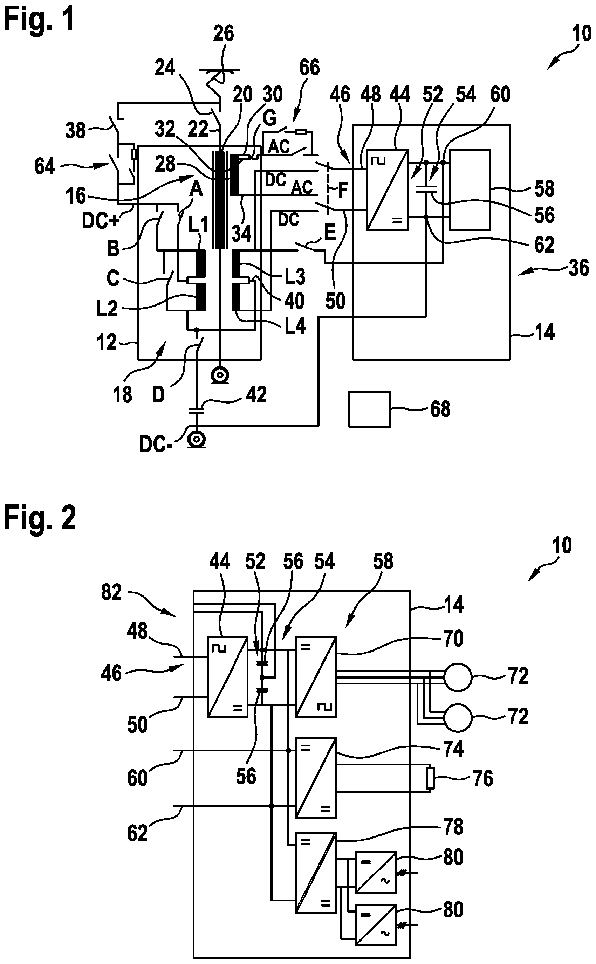

Fig. 1 shows a traction converter 10 of a traction vehicle, which comprises an inductor assembly 12 and a converter assembly 14. All components described below may be part of the traction vehicle.

The inductor assembly 12 comprises a transformer 16 and a choke arrangement 18. The components 16, 18 of the inductor assembly 12 may be mechanically interconnected as one member and/or may comprise a common housing and/or compartment.

A first input of the primary side 20 of the transformer 16 is connected to an AC input 22 of the traction converter 10, which is connectable via an AC switch 24 to an electric input 26 of the traction vehicle, such as a pantograph. The second input of the primary side 20 is earthed.

The secondary side 28 of the transformer 16 comprises a winding 28 with three outputs 30, 32, 34. The upper and lower output 30, 34 provide a longer part of the winding 28. The middle output 32 and the lower output provide a shorter part of the winding 28. With a transformer switch G, either the upper output 30 or the middle output 32 can be selected. The lengths of the longer part and the shorter part are selected, such that the same output voltage is provided by transformer 16, when two specific AC input voltages from the AC input 22 are applied to the transformer 16.

The transformer switch G and further switches A to F as described above and below are components of a switch arrangement 36.

The choke arrangement 18 comprises two line chokes LI, L2 and two chopper chokes L3, L4.

The line chokes L1, L2 are directly connected with first ends and are connected via a first line choke switch C via their second ends. The first ends of the line chokes L1, L2 are furthermore connected via a second line choke switch A with a positive DC input DC+ of the traction converter 10. The positive DC input DC+ is connectable via a DC switch 38 to the electric input 26 of the traction vehicle.

The second end of the line choke L1 is connected via a third line choke switch B to the positive DC input DC+.

The two chopper chokes L3, L4 are connected with first ends to a midpoint 40. In the case of more than two chopper chokes, the midpoint 40 may be seen as a star-point 40. The second end of the line choke L2 is connected to the midpoint 40.

The midpoint/star-point 40 and the second end of the line choke L2 are connected via a filter switch D with a filter capacitor 42, which is earthed and/or connected to a negative DC input DC-.

The converter assembly 14 comprises a four quadrant converter 44, which has an input side 46, which is connectable via a mode switch F either with the secondary side 28 of the transformer 16 or with the chopper chokes L3, L4.

In particular, in a first position "AC", the mode switch F connects an upper input 48 of the input side 46 with the upper or middle output 30, 32 of the secondary side 28 of the transformer 16 (dependent on the transformer switch G) and connects a lower input 50 of the input side 46 with the lower output 34. In a second position "DC", the mode switch F connects the upper input 48 of the input side 46 with a second end of the chopper choke L3 and connects the lower input 50 of the input side 46 with the second end of the chopper choke L4.

It may be that the four quadrant converter 44 has more than two inputs on the input side, for example, when it is a three-phase converter. Then, the secondary side 28 of the transformer 16 may have a winding for each phase and/or there may be a chopper choke for each phase.

An output side 52 of the four quadrant converter 44 is connected with a DC link 54. An AC voltage at the input side 46 may be converted by the four quadrant converter 44 into a DC voltage supplied to the DC link 54. To this end, the four quadrant converter 44 may be composed of semiconductor bridges for each phase, which may comprise controllable semiconductor switches, such as IGBTs. However, also other topologies, such as buck and/or boost converters, are possible.

The DC link 54 comprises a DC link capacitor 56 and is connected to one or more loads 58, examples of which will be described with respect to Fig. 2.

A positive input 60 of the DC link 54 is connected with a DC link switch E to the choke arrangement 18 and in particular to the second end of the chopper choke L3. A negative input 62 of the DC link 54 is earthed and/or connected to the negative DC input DC-.

Additionally, a DC charging unit 64 may be connected between the electric input 26 and the DC input DC+. Also, an AC charging unit 66 may be connected between the secondary side 28 of the transformer 16 and the input side 46 of the four quadrant converter 44. Each charging unit 64, 66 may comprise two switches to select between a connection without resistance and a connection with resistance.

The traction converter 10 furthermore comprises a controller 68 for controlling the switch arrangement 36, i.e. the switches 24, 38 and A to G, the charging units 64, 66, the four quadrant converter 44 and the loads 58.

Fig. 2 shows an example of a converter assembly 14 with several loads 58. A motor converter 70 may be connected to the DC link 54, which motor converter supplies one or more motors 72 of the traction vehicle. Furthermore, a voltage limiting unit 74 may be connected to the DC link, which supplies a braking resistor 76. Also, an auxiliary DC-to-DC converter 78 may be connected to the DC link 54, which supplies one or more auxiliary DC-to-AC converters 80.

In Fig. 2 it is also shown that the DC link 54 may comprise two series connected DC link capacitors 56. One of the DC link capacitors 56 may be connected in parallel to an earthing switch 82.

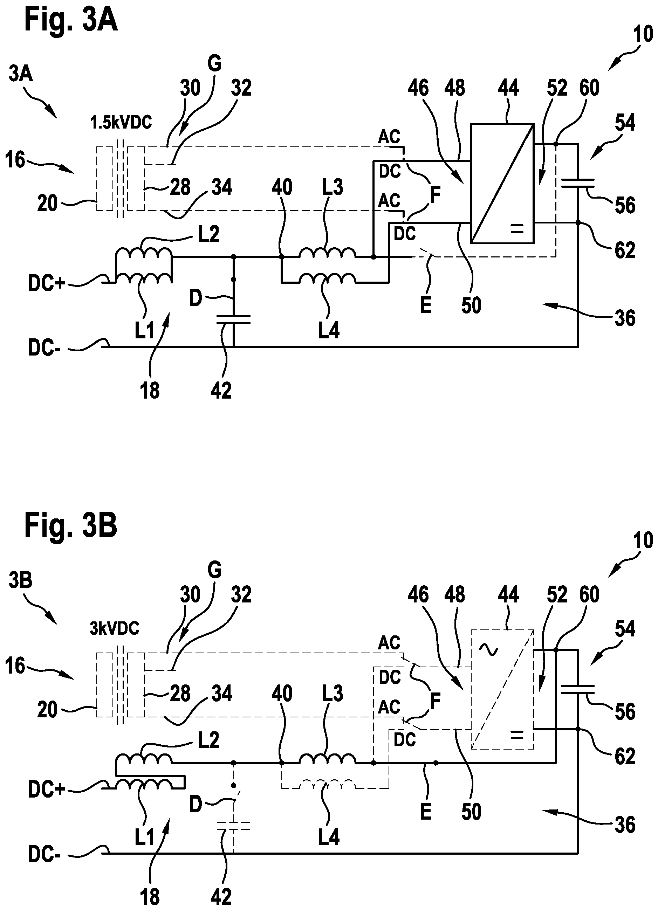

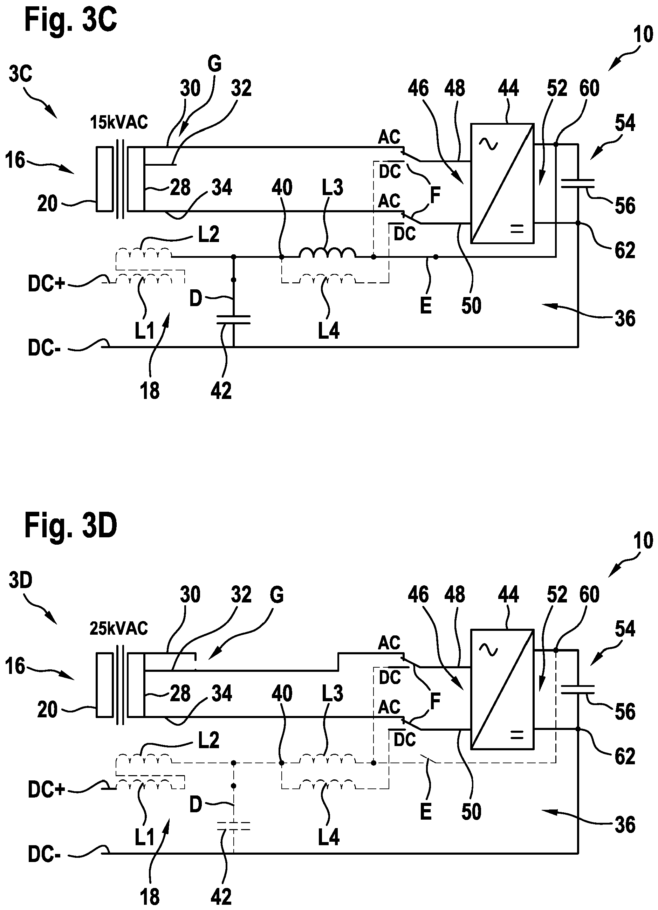

Fig. 3A to 3D illustrate operation modes of the traction converter 10, which operation modes are also numbered by 3A, 3B, 3C, 3D.

The operation modes 3A and 3B are DC operation modes, in which the transformer 16 is not used. Therefore, AC switch 24 is open and DC switch 38 is closed. In the DC operation modes 3A, 3B, the electric input 26 of the traction converter 10 is connected to the positive DC input DC+ of the traction converter 10.

On the other hand, the operation modes 3C and 3D are AC operation modes, in which the transformer 16 is used. Therefore, AC switch 24 is closed and DC switch 38 is open. In the AC operation modes 3C, 3D, the electric input 26 of the traction converter 10 is connected to the AC input 22 of the traction converter 10.

Following table shows how the switches 24, 38 are switched to connect the AC input 22 or the DC input DC+ to the electric input 26. The table also shows, how the switches A, B and C are switched to connect the line chokes L1, L2 in parallel or in series.

| | 24 | 38 | A | B | C |
|---|---|---|---|---|---|
| 3A | Open | Closed | Closed | Open | Closed |
| 3B | Open | Closed | Open | Closed | Open |
| 3C | Closed | Open | not relevant | not relevant | not relevant |
| 3D | Closed | Open | not relevant | not relevant | not relevant |

In the first DC operation mode 3A, the mode switch F is in position "DC" and the at least one chopper choke L3, L4 is connected between inputs 48, 50 of the input side 46 of the four quadrant converter 44 and the positive DC input DC+ of the traction converter 10 is connected to the at least one chopper choke L3, L4. Ends of the two chopper chokes L3, L4 are connected to the inputs 48, 50 of the input side 46 of the four quadrant converter 44. The positive DC input DC+ of the traction converter 10 is connected via the line chokes L1, L2 to the other ends of the two chopper chokes L3, L4, which provide the midpoint 40 or star-point 40.

In the first DC operation mode 3A, the two line chokes L1, L2 are connected in parallel between the positive DC input DC+ of the traction converter 10 and the midpoint 40.

Furthermore, in the first DC operation mode 3A, the switch D is closed and the filter capacitor 42 is connected between the choke arrangement 18 via the midpoint 40 and a negative DC input DC- of the traction converter 10. DC link switch E is opened.

In the first DC operation mode 3A, the four quadrant converter 44 is operated as step-up converter using the chopper chokes L3, L4 as energy storage.

Turning to Fig. 3B, in the second DC operation mode 3B, the four quadrant converter 44 is not used and the mode switch is in position "AC" to disconnect the choke arrangement 18 and the chopper chokes L3, L4 from the input side 46 of the four quadrant converter 44.

In the second DC operation mode 3B, the two line chokes L1, L2 are connected in series between the positive DC input DC+ of the traction converter 10 and the at least one chopper choke L3, L4.

Furthermore, in the second DC operation mode 3B, the chopper choke L3 is connected between the series connected line chokes L1, L2 and the DC link 54. The DC link switch E is closed and an end of the chopper choke L3 is connected to the positive input 60 of the DC link 54. The switch D is opened and the filter capacitor 42 is disconnected from the choke arrangement 18.

In both the AC operation modes 3C and 3D, mode switch F is switched into position "AC", such that the transformer 16 is connected with the four quadrant converter 44. Furthermore, the four quadrant converter 44 is operated as AC-to-DC rectifier. The line chokes L1 and L2 are not used.

In the first AC operation mode 3C, the transformer switch G is in a position such that the input side 46 of the four quadrant converter 44 is connected with the longer part of the secondary winding 28 of the transformer 16. Furthermore, switches D and E are closed and the filter capacitor 42 and the chopper choke L3 are connected in series between the negative DC input DC- and the positive input 60 of the DC link 54.

In the second AC operation mode 3D, the transformer switch G is in a position such that the input side 46 of the four quadrant converter 44 is connected with the shorter part of the secondary winding 28 of the transformer 16. DC link switch E is open and the filter capacitor 42 and the chopper choke L3, L4 are disconnected from the DC link 54.

The following two tables indicate the position of the switches D, E, F and G during the operation modes 3A to 3D and also give an example of a voltage that may be supplied via the electric input 26 to the traction converter 10.

| | 26 | D | E | F | G |
|---|---|---|---|---|---|
| 3A | 1.5 kV DC | Closed | Open | DC | not relevant |
| 3B | 3 kV DC | Open | Closed | AC | not relevant |
| 3C | 15 kV AC | Closed | Closed | AC | 15 kV |
| 3D | 25 kV AC | not relevant | Open | AC | 25 kV |

When switching into one of the operation modes 3A to 3D, the controller 68 may switch the corresponding switches as described above and/or may operate the four quadrant converter as described above.

While the invention has been illustrated and described in detail in the drawings and foregoing description, such illustration and description are to be considered illustrative or exemplary and not restrictive; the invention is not limited to the disclosed embodiments but only by the appended claims

## Claims

1. A traction converter (10), comprising:
a transformer (16) for transforming an AC voltage at a primary side (20) from an electric input (26) of the traction converter (10) into a different AC voltage at a secondary side (28);
a four quadrant converter (44) for converting an AC voltage at an input side (46) into a DC voltage at an output side (52) connected to a DC link (54), wherein a negative input (62) of the DC link (54) is connected to a negative DC input (DC-) of the traction converter (10);
a choke arrangement (18) comprising two chopper chokes (L3, L4) connected together in a midpoint (40);
a switch arrangement (36); wherein, in an AC operation mode (3C, 3D) of the traction converter (10), the switch arrangement (36) is adapted for connecting the primary side (20) of the transformer (16) to the electric input (26) of the traction converter (10) and for connecting the secondary side (28) of the transformer (16) to the input side (46) of the four quadrant converter (44);
wherein, in a DC operation mode (3A) of the traction converter (10), the switch arrangement (36) is adapted for connecting the electric input (26) of the traction converter (10) to a positive DC input (DC+) of the traction converter (10); for connecting ends of the two chopper chokes (L3, L4) not connected to the midpoint (40) to a first input (48) and a second input (50) of the input side (46) of the four quadrant converter (44) and for connecting the positive DC input (DC+) of the traction converter (10) to the midpoint (40) between the two chopper chokes (L3, L4);
wherein the traction converter (10) comprises a filter capacitor (42);
wherein, in the DC operation mode (3A), the switch arrangement (36) is adapted for connecting the filter capacitor (42) to the midpoint (40) between the two chopper chokes (L3, L4) and to the negative DC input (DC-) of the traction converter (10);
**characterized in that**
in the AC operation mode (3C), the switch arrangement (36) is adapted for connecting the filter capacitor (42) and one of the two chopper chokes (L3) in series and for connecting the series connection of the filter capacitor (42) and the one of the two chopper chokes (L3) in parallel with the DC link (54).

2. The traction converter (10) of claim 1,
wherein the switch arrangement (36) comprises a mode switch (F) for either connecting the first input (48) of the input side (46) of the four quadrant converter (44) with a first output (30, 32, 34) of the secondary side (28) of the transformer (16) or with the at least one chopper choke (L3).

3. The traction converter (10) of claim 2,
wherein the mode switch (F) is adapted for either connecting the second input (50) of the input side (46) of the four quadrant converter (44) with a second output (34) of the secondary side (28) of the transformer (16) or with the other one of the two chopper chokes (L3, L4).

4. The traction converter (10) of one of the previous claims,
wherein the DC operation mode is a first DC operation mode (3A);
wherein, in a second DC operation mode (3B), the switch arrangement (36) is adapted for connecting the at least one chopper choke (L3) between the positive DC input (DC+) of the traction converter (10) and a positive input of the DC link (54);
wherein the switch arrangement (36) comprises a DC link switch (E) for disconnecting the one of the two chopper chokes (L3) from the DC link (54).

5. The traction converter (10) of claim 4,
wherein in the second DC operation mode (3B), the four quadrant converter (44) is bypassed and the at least one chopper choke (L3) is connected to the DC link (54).

6. The traction converter (10) of one of the previous claims,
wherein the switch arrangement (36) comprises a filter switch (D) for disconnecting the filter capacitor (42) from the one of the two chopper chokes (L3, L4).

7. The traction converter (10) of claim 6,
wherein the AC operation mode is a first AC operation mode (3A);
wherein, in a second AC operation mode (3B), the filter capacitor (42) and the two chopper chokes (L3, L4) are disconnected from the DC link (54).

8. The traction converter (10) of one of the previous claims,
wherein the secondary side (28) of the transformer (16) comprises a secondary winding (28) with three outputs (30, 32, 34);
wherein, in the AC operation mode being a first operation mode (3C), the switch arrangement (36) is adapted for connecting the input side (46) of the four quadrant converter (44) with a longer part of the secondary winding (28);
wherein, in a second AC operation mode (3D), the switch arrangement (36) is adapted for connecting the input side (46) of the four quadrant converter (44) with a shorter part of the secondary winding (28).

9. The traction converter (10) of claim 8,
wherein the switch arrangement (36) comprises a transformer switch (G) for either connecting an input (48) of the input side (46) of the four quadrant converter (44) to a first output (30) of the secondary winding (28) or to a second output (32) of the secondary winding (28).

10. The traction converter (10) of one of the previous claims,
wherein the choke arrangement (18) comprises two line chokes (L1, L2);
wherein the switch arrangement (36) is adapted for connecting the two line chokes (L1, L2) in parallel or in series between the positive DC input (DC+) of the traction converter (10) and the midpoint (40) between the two chopper chokes (L3, L4).

11. The traction converter (10) of claim 10,
wherein the line chokes (L1, L2) are directly connected to each other via their first ends and are connected via a first line choke switch (C) via their second ends;
wherein the first ends are connected via a second line choke switch (A) with the DC input (DC+);
wherein one of the second ends is connected via a third line choke switch (B) to the DC input (DC+) and the other second end is connected to the midpoint (40) between the two chopper chokes (L3, L4).

12. The traction converter (10) of one of the previous claims,
wherein the DC link (54) comprises at least one DC link capacitor (56).

13. The traction converter (10) of one of the previous claims, further comprising:
at least one secondary side converter (70, 74, 78) connected to the DC link (54);
wherein the at least one secondary side converter (70, 74, 78) is adapted for suppling at least one of a motor (72) of the traction vehicle, a braking resistor (76) and an auxiliary load.

14. A method for operating the traction converter (10) according to one of the previous claims, the method comprising:
in an AC operation mode (3A, 3B) of the traction converter (10):
connecting the primary side (20) of the transformer (16) to the electric input (26) of the traction converter (10);
connecting the secondary side (28) of the transformer (6) to the input side (46) of the four quadrant converter (44);
connecting the filter capacitor (42) and the one of the two chopper chokes (L3) in series and connecting the series connection of the filter capacitor (42) and the one of the two chopper chokes (L3) in parallel with the DC link (54);
operating the four quadrant converter (44) as AC-to-DC rectifier;
in a DC operation mode (3A) of the traction converter (10):
connecting the electric input (26) of the traction converter (10) to a positive DC input (DC+) of the traction converter (10),
connecting the two chopper chokes (L3, L4) to the first input (48) and the second input (50) of the input side (46) of the four quadrant converter (44);
connecting the positive DC input (DC+) of the traction converter (10) to the midpoint (40) between the two chopper chokes (L3, L4);
connecting the filter capacitor (42) to the midpoint (40) between the two chopper chokes (L3, L4) and to the negative DC input (DC-) of the traction converter (10);
operating the four quadrant converter (44) as step-up converter using the two chopper chokes (L3, L4).

## Patentansprüche

1. Traktionsumrichter (10), der Folgendes umfasst:
einen Transformator (16) zum Umwandeln einer Wechselspannung an einer Primärseite (20) von einem elektrischen Eingang (26) des Traktionsumrichters (10) in eine andere Wechselspannung an einer Sekundärseite (28),
einen Vierquadrantensteller (44) zum Umwandeln einer Wechselspannung an einer Eingangsseite (46) in eine Gleichspannung an einer Ausgangsseite (52), die mit einem Gleichspannungs-Zwischenkreis (54) verbunden ist,
wobei ein negativer Eingang (62) des Gleichspannungs-Zwischenkreises (54) mit einem negativen Gleichstromeingang (DC-) des Traktionsumrichters (10) verbunden ist;
eine Drosselanordnung (18) mit zwei in einem Mittelpunkt (40) miteinander verbundenen Chopperdrosseln (L3, L4);
eine Schalteranordnung (36);
wobei in einem Wechselstrom-Betriebsmodus (3C, 3D) des Traktionsumrichters (10) die Schalteranordnung (36) zum Verbinden der Primärseite (20) des Transformators (16) mit dem elektrischen Eingang (26) des Traktionsumrichters (10) und zum Verbinden der Sekundärseite (28) des Transformators (16) mit der Eingangsseite (46) des Vierquadrantenstellers (44) ausgebildet ist;
wobei in einem Gleichstrom-Betriebsmodus (3A) des Traktionsumrichters (10) die Schalteranordnung (36) zum Verbinden des elektrischen Eingangs (26) des Traktionsumrichters (10) mit einem positiven Gleichstromeingang (DC+) des Traktionsumrichters (10) ausgebildet ist;
zum Verbinden der nicht mit dem Mittelpunkt (40) verbundenen Enden der beiden Chopperdrosseln (L3, L4) mit einem ersten Eingang (48) und einem zweiten Eingang (50) der Eingangsseite (46) des Vierquadrantenstellers (44) und zum Verbinden des positiven Gleichstromeingangs (DC+) des Traktionsumrichters (10) mit dem Mittelpunkt (40) zwischen den beiden Chopperdrosseln (L3, L4);
wobei der Traktionsumrichter (10) einen Filterkondensator (42) umfasst;
wobei, im Gleichstrom-Betriebsmodus (3A), die Schalteranordnung (36) dazu ausgelegt ist, den Filterkondensator (42) mit dem Mittelpunkt (40) zwischen den beiden Chopperdrosseln (L3, L4) und mit dem negativen Gleichstromeingang (DC-) des Traktionsumrichters (10) zu verbinden;
**dadurch gekennzeichnet, dass**, im Wechselstrom-Betriebsmodus (3C), die Schalteranordnung (36) dazu ausgelegt ist, den Filterkondensator (42) und eine der beiden Chopperdrosseln (L3) in Reihe zu schalten und die Reihenschaltung des Filterkondensators (42) und der einen der beiden Chopperdrosseln (L3) parallel zum Gleichspannungs-Zwischenkreis (54) zu schalten.

2. Traktionsumrichter (10) nach Anspruch 1,
wobei die Schalteranordnung (36) einen Modusschalter (F) umfasst, um entweder den ersten Eingang (48) der Eingangsseite (46) des Vierquadrantenstellers (44) mit einem ersten Ausgang (30, 32, 34) der Sekundärseite (28) des Transformators (16) oder mit der mindestens einen Chopperdrossel (L3) zu verbinden.

3. Traktionsumrichter (10) nach Anspruch 2,
wobei der Modusschalter (F) dazu ausgelegt ist, entweder den zweiten Eingang (50) der Eingangsseite (46) des Vierquadrantenstellers (44) mit einem zweiten Ausgang (34) der Sekundärseite (28) des Transformators (16) oder mit der anderen der beiden Chopperdrosseln (L3, L4) zu verbinden.

4. Traktionsumrichter (10) nach einem der vorhergehenden Ansprüche,
wobei der Gleichstrom-Betriebsmodus ein erster Gleichstrom-Betriebsmodus (3A) ist;
wobei, in einem zweiten Gleichstrom-Betriebsmodus (3B), die Schalteranordnung (36) dazu ausgelegt ist, die mindestens eine Chopperdrossel (L3) zwischen den positiven Gleichstromeingang (DC+) des Traktionsumrichters (10) und einen positiven Eingang des Gleichspannungs-Zwischenkreises (54) zu schalten;
wobei die Schalteranordnung (36) einen Zwischenkreisschalter (E) zum Trennen der einen der beiden Chopperdrosseln (L3) vom Gleichspannungs-Zwischenkreis (54) umfasst.

5. Traktionsumrichter (10) nach Anspruch 4,
wobei, im zweiten Gleichstrom-Betriebsmodus (3B) der Vierquadrantensteller (44) überbrückt wird und die mindestens eine Chopperdrossel (L3) mit dem Gleichstrom-Zwischenkreis (54) verbunden ist.

6. Traktionsumrichter (10) nach einem der vorhergehenden Ansprüche,
wobei die Schalteranordnung (36) einen Filterschalter (D) zum Trennen des Filterkondensators (42) von der einen der beiden Chopperdrosseln (L3, L4) umfasst.

7. Traktionsumrichter (10) nach Anspruch 6,
wobei der Wechselstrom-Betriebsmodus ein erster Wechselstrom-Betriebsmodus (3A) ist;
wobei, in einem zweiten Wechselstrom-Betriebsmodus (3B), der Filterkondensator (42) und die beiden Chopperdrosseln (L3, L4) vom Gleichstrom-Zwischenkreis (54) getrennt sind.

8. Traktionsumrichter (10) nach einem der vorhergehenden Ansprüche,
wobei die Sekundärseite (28) des Transformators (16) eine Sekundärwicklung (28) mit drei Ausgängen (30, 32, 34) aufweist;
wobei, im Wechselstrom-Betriebsmodus, der ein erster Betriebsmodus (3C) ist, die Schalteranordnung (36) dazu ausgelegt ist, die Eingangsseite (46) des Vierquadrantenstellers (44) mit einem längeren Teil der Sekundärwicklung (28) zu verbinden;
wobei, in einem zweiten Wechselstrom-Betriebsmodus (3D), die Schalteranordnung (36) zum Verbinden der Eingangsseite (46) des Vierquadrantenstellers (44) mit einem kürzeren Teil der Sekundärwicklung (28) ausgelegt ist.

9. Traktionsumrichter (10) nach Anspruch 8,
wobei die Schalteranordnung (36) einen Transformatorschalter (G) umfasst, um entweder einen Eingang (48) der Eingangsseite (46) des Vierquadrantenstellers (44) mit einem ersten Ausgang (30) der Sekundärwicklung (28) oder mit einem zweiten Ausgang (32) der Sekundärwicklung (28) zu verbinden.

10. Traktionsumrichter (10) nach einem der vorhergehenden Ansprüche,
wobei die Drosselanordnung (18) zwei Netzdrosseln (L1, L2) umfasst;
wobei die Schalteranordnung (36) dazu ausgelegt ist, die beiden Netzdrosseln (L1, L2) parallel oder in Reihe zwischen den positiven Gleichstromeingang (DC+) des Traktionsumrichters (10) und den Mittelpunkt (40) zwischen den beiden Chopperdrosseln (L3, L4) zu schalten.

11. Traktionsumrichter (10) nach Anspruch 10,
wobei die Netzdrosseln (L1, L2) über ihre ersten Enden direkt miteinander verbunden sind und über ihre zweiten Enden über einen ersten Netzdrosselschalter (C) verbunden sind;
wobei die ersten Enden über einen zweiten Netzdrosselschalter (A) mit dem Gleichstromeingang (DC+) verbunden sind;
wobei eines der zweiten Enden über einen dritten Netzdrosselschalter (B) mit dem Gleichstromeingang (DC+) und das andere zweite Ende mit dem Mittelpunkt (40) zwischen den beiden Chopperdrosseln (L3, L4) verbunden ist.

12. Traktionsumrichter (10) nach einem der vorhergehenden Ansprüche,
wobei der Gleichspannungs-Zwischenkreis (54) mindestens einen Zwischenkreiskondensator (56) umfasst.

13. Traktionsumrichter (10) nach einem der vorhergehenden Ansprüche, der ferner Folgendes umfasst:
mindestens einen sekundärseitigen Umrichter (70, 74, 78), der mit dem Gleichstrom-Zwischenkreis (54) verbunden ist;
wobei der mindestens eine sekundärseitige Umrichter (70, 74, 78) dazu ausgelegt ist, mindestens ein Element eines Motors (72) des Zugfahrzeugs, eines Bremswiderstands (76) und einer Hilfslast zu versorgen.

14. Verfahren zum Betreiben des Traktionsumrichters (10) nach einem der vorhergehenden Ansprüche, wobei das Verfahren Folgendes umfasst:
in einem Wechselstrom-Betriebsmodus (3A, 3B) des Traktionsumrichters (10):
Verbinden der Primärseite (20) des Transformators (16) mit dem elektrischen Eingang (26) des Traktionsumrichters (10);
Verbinden der Sekundärseite (28) des Transformators (6) mit der Eingangsseite (46) des Vierquadrantenstellers (44);
Schalten des Filterkondensators (42) und der einen der beiden Chopperdrosseln (L3) in Reihe, und Parallelschalten der Reihenschaltung des Filterkondensators (42) und der einen der beiden Chopperdrosseln (L3) mit dem Gleichstrom-Zwischenkreis (54);
Betreiben des Vierquadrantenstellers (44) als AC/DC-Gleichrichter;
in einem Gleichstrom-Betriebsmodus (3A) des Traktionsumrichters (10):
Verbinden des elektrischen Eingangs (26) des Traktionsumrichters (10) mit einem positiven Gleichstromeingang (DC+) des Traktionsumrichters (10),
Verbinden der beiden Chopperdrosseln (L3, L4) mit dem ersten Eingang (48) und dem zweiten Eingang (50) der Eingangsseite (46) des Vierquadrantenstellers (44);
Verbinden des positiven Gleichstromeingangs (DC+) des Traktionsumrichters (10) mit dem Mittelpunkt (40) zwischen den beiden Chopperdrosseln (L3, L4);
Verbinden des Filterkondensators (42) mit dem Mittelpunkt (40) zwischen den beiden Chopperdrosseln (L3, L4) und mit dem negativen Gleichstromeingang (DC-) des Traktionsumrichters (10) ;
Betreiben des Vierquadrantenstellers (44) als Hochsetzsteller unter Verwendung der beiden Chopperdrosseln (L3, L4).

## Revendications

1. Convertisseur de traction (10), comprenant :
un transformateur (16) destiné à transformer une tension alternative au niveau d'un côté principal (20) d'une entrée électrique (26) du convertisseur de traction (10) en une tension alternative différente au niveau d'un côté secondaire (28) ;
un convertisseur à quatre quadrants (44) destiné à convertir une tension alternative au niveau d'un côté d'entrée (46) en une tension continue au niveau d'un côté de sortie (52) connecté à une liaison à courant continu (54), une entrée négative (62) de la liaison à courant continu (54) étant connectée à une entrée continue négative (DC-) du convertisseur de traction (10) ;
un agencement de bobines d'arrêt (18) comprenant deux bobines d'arrêt de hacheur (L3, L4) connectées ensemble en un point médian (40) ;
un agencement de commutateurs (36) ; dans un mode de fonctionnement en courant alternatif (3C, 3D) du convertisseur de traction (10), l'agencement de commutateurs (36) étant conçu pour connecter le côté principal (20) du transformateur (16) à l'entrée électrique (26) du convertisseur de traction (10) et pour connecter le côté secondaire (28) du transformateur (16) au côté d'entrée (46) du convertisseur à quatre quadrants (44) ;
dans un mode de fonctionnement en courant continu (3A) du convertisseur de traction (10), l'agencement de commutateurs (36) étant conçu pour connecter l'entrée électrique (26) du convertisseur de traction (10) à une entrée continue positive (DC+) du convertisseur de traction (10) ; pour connecter des extrémités des deux bobines d'arrêt de hacheur (L3, L4) non connectées au point médian (40) à une première entrée (48) et à une deuxième entrée (50) du côté d'entrée (46) du convertisseur à quatre quadrants (44) et pour connecter l'entrée continue positive (DC+) du convertisseur de traction (10) au point médian (40) entre les deux bobines d'arrêt de hacheur (L3, L4) ;
le convertisseur de traction (10) comprenant un condensateur de filtrage (42) ;
dans le mode de fonctionnement en courant continu (3A), l'agencement de commutateurs (36) étant conçu pour connecter le condensateur de filtrage (42) au point médian (40) entre les deux bobines d'arrêt de hacheur (L3, L4) et à l'entrée continue négative (DC-) du convertisseur de traction (10) ;
caractérisé ce que
dans le mode de fonctionnement en courant alternatif (3C), l'agencement de commutateurs (36) est conçu pour connecter le condensateur de filtrage (42) et une des deux bobines d'arrêt de hacheur (L3) en série et pour connecter la connexion série du condensateur de filtrage (42) et de la dite des deux bobines d'arrêt de hacheur (L3) en parallèle à la liaison à courant continu (54).

2. Convertisseur de traction (10) selon la revendication 1,
l'agencement de commutateurs (36) comprenant un commutateur de mode (F) pour connecter la première entrée (48) du côté d'entrée (46) du convertisseur à quatre quadrants (44) soit à une première sortie (30, 32, 34) du côté secondaire (28) du transformateur (16) soit à la ou aux bobines d'arrêt de hacheur (L3).

3. Convertisseur de traction (10) selon la revendication 2,
le commutateur de mode (F) étant conçu pour connecter la deuxième entrée (50) du côté d'entrée (46) du convertisseur à quatre quadrants (44) soit à une deuxième sortie (34) du côté secondaire (28) du transformateur (16) soit à l'autre des deux bobines d'arrêt de hacheur (L3, L4).

4. Convertisseur de traction (10) selon l'une des revendications précédentes,
le mode de fonctionnement en courant continu étant un premier mode de fonctionnement en courant continu (3A) ;
dans un deuxième mode de fonctionnement en courant continu (3B), l'agencement de commutateurs (36) étant conçu pour connecter la ou les bobines d'arrêt de hacheur (L3) entre l'entrée continue positive (DC+) du convertisseur de traction (10) et une entrée positive de la liaison à courant continu (54) ;
l'agencement de commutateurs (36) comprenant un commutateur de liaison à courant continu (E) pour déconnecter la dite des deux bobines d'arrêt de hacheur (L3) de la liaison à courant continu (54).

5. Convertisseur de traction (10) selon la revendication 4,
dans le deuxième mode de fonctionnement en courant continu (3B), le convertisseur à quatre quadrants (44) étant contourné et la ou les bobines d'arrêt de hacheur (L3) étant connectées à la liaison à courant continu (54).

6. Convertisseur de traction (10) selon l'une des revendications précédentes,
l'agencement de commutateurs (36) comprenant un commutateur de filtrage (D) pour déconnecter le condensateur de filtrage (42) de la dite des deux bobines d'arrêt de hacheur (L3, L4).

7. Convertisseur de traction (10) selon la revendication 6,
le mode de fonctionnement en courant alternatif étant un premier mode de fonctionnement en courant alternatif (3A) ;
dans un deuxième mode de fonctionnement en courant alternatif (3B), le condensateur de filtrage (42) et les deux bobines d'arrêt de hacheur (L3, L4) étant déconnectés de la liaison à courant continu (54).

8. Convertisseur de traction (10) selon l'une des revendications précédentes,
le côté secondaire (28) du transformateur (16) comprenant un enroulement secondaire (28) avec trois sorties (30, 32, 34) ;
dans le mode de fonctionnement en courant alternatif qui est un premier mode de fonctionnement (3C), l'agencement de commutateurs (36) étant conçu pour connecter le côté d'entrée (46) du convertisseur à quatre quadrants (44) à une partie plus longue de l'enroulement secondaire (28) ;
dans un deuxième mode de fonctionnement en courant alternatif (3D), l'agencement de commutateurs (36) étant conçu pour connecter le côté d'entrée (46) du convertisseur à quatre quadrants (44) à une partie plus courte de l'enroulement secondaire (28).

9. Convertisseur de traction (10) selon la revendication 8,
l'agencement de commutateurs (36) comprenant un commutateur de transformateur (G) pour connecter une entrée (48) du côté d'entrée (46) du convertisseur à quatre quadrants (44) soit à une première sortie (30) de l'enroulement secondaire (28) soit à une deuxième sortie (32) de l'enroulement secondaire (28).

10. Convertisseur de traction (10) selon l'une des revendications précédentes,
l'agencement de bobines d'arrêt (18) comprenant deux bobines d'arrêt de ligne (L1, L2) ;
l'agencement de commutation (36) étant conçu pour connecter les deux bobines d'arrêt de ligne (L1, L2) en parallèle ou en série entre l'entrée continue positive (DC+) du convertisseur de traction (10) et le point médian (40) entre les deux bobines d'arrêt de hacheur (L3, L4).

11. Convertisseur de traction (10) selon la revendication 10,
les bobines d'arrêt de ligne (L1, L2) étant directement connectées l'une à l'autre via leurs premières extrémités et étant connectées via un premier commutateur de bobines d'arrêt de ligne (C) via leurs deuxièmes extrémités ;
les premières extrémités étant connectées via un deuxième commutateur de bobines d'arrêt de ligne (A) à l'entrée continue (DC+) ;
une des deuxièmes extrémités étant connectée via un troisième commutateur de bobines d'arrêt de ligne (B) à l'entrée continue (DC+) et l'autre deuxième extrémité étant connectée au point médian (40) entre les deux bobines d'arrêt de hacheur (L3, L4).

12. Convertisseur de traction (10) selon l'une des revendications précédentes,
la liaison à courant continu (54) comprenant au moins un condensateur de liaison à courant continu (56).

13. Convertisseur de traction (10) selon l'une des revendications précédentes, comprenant en outre :
au moins un convertisseur de côté secondaire (70, 74, 78) connecté à la liaison à courant continu (54) ;
le ou les convertisseurs de côté secondaire (70, 74, 78) étant conçus pour l'alimentation d'un moteur (72) du véhicule de traction et/ou d'une résistance de freinage (76) et/ou d'une charge auxiliaire.

14. Procédé d'exploitation du convertisseur de traction (10) selon l'une des revendications précédentes, le procédé comprenant :
dans un mode de fonctionnement en courant alternatif (3A, 3B) du convertisseur de traction (10) :
la connexion du côté principal (20) du transformateur (16) à l'entrée électrique (26) du convertisseur de traction (10) ;
la connexion du côté secondaire (28) du transformateur (6) au côté d'entrée (46) du convertisseur à quatre quadrants (44) ;
la connexion du condensateur de filtrage (42) et de la dite des deux bobines d'arrêt de hacheur (L3) en série et la connexion de la connexion série du condensateur de filtrage (42) et de la dite des deux bobines d'arrêt de hacheur (L3) en parallèle à la liaison à courant continu (54) ;
l'exploitation du convertisseur à quatre quadrants (44) comme redresseur alternatifcontinu ;
dans un mode de fonctionnement en courant continu (3A) du convertisseur de traction (10) :
la connexion de l'entrée électrique (26) du convertisseur de traction (10) à une entrée continue positive (DC+) du convertisseur de traction (10),
la connexion des deux bobines d'arrêt de hacheur (L3, L4) à la première entrée (48) et à la deuxième entrée (50) du côté d'entrée (46) du convertisseur à quatre quadrants (44) ;
la connexion de l'entrée continue positive (DC+) du convertisseur de traction (10) au point médian (40) entre les deux bobines d'arrêt de hacheur (L3, L4) ;
la connexion du condensateur de filtrage (42) au point médian (40) entre les deux bobines d'arrêt de hacheur (L3, L4) et à l'entrée continue négative (DC-) du convertisseur de traction (10) ;
l'exploitation du convertisseur à quatre quadrants (44) comme convertisseur élévateur en utilisant les deux bobines d'arrêt de hacheurs (L3, L4).
